# FASCICULE DE BREVET EUROPEEN

(11) **EP 2 756 193 B1**
(45) Date de publication et mention de la délivrance du brevet: **04.11.2015**
(21) Numéro de dépôt: 12832698.0
(22) Date de dépôt: 13.08.2012
(51) Int. Cl.: F04B 51/00, F01D 17/16, F01D 17/18, F02C 6/06, F02C 7/26, F02C 7/268, F02C 7/27, F02C 7/28, F02C 9/18, F02C 9/22, F04B 49/10

(54) **PROCEDE DE SUIVI DU RENDEMENT VOLUMETRIQUE D'UNE POMPE HP D'UN SYSTEME DE REGULATION HYDRAULIQUE DE TURBOMACHINE**
VERFAHREN ZUR ÜBERWACHUNG DER VOLUMETRISCHEN LEISTUNG EINER HOCHDRUCKPUMPE EINES HYDRAULISCHEN REGELSYSTEMS FÜR EINE TURBOMASCHINE
METHOD FOR MONITORING THE VOLUMETRIC EFFICIENCY OF AN HP PUMP OF A HYDRAULIC REGULATION SYSTEM FOR A TURBOMACHINE

(30) Priorité: 13.09.2011 FR 1158133
(43) Date de publication de la demande: 23.07.2014
(73) Titulaire: SNECMA, 75015 Paris (FR)
(72) Inventeur: POTEL, Nicolas, F-77550 Moissy Cramayel Cedex (FR); GOMES, Nicolas, F-77550 Moissy Cramayel (FR)
(74) Mandataire: David, Alain
(86) Numéro de dépôt international: PCT/FR2012/051888
(87) Numéro de publication internationale: WO 2013/038085

(56) Documents cités:
- EP-A2- 1 138 933
- EP-A2- 1 785 348
- EP-A2- 1 798 400
- FR-A1- 2 923 871
- FR-A1- 2 942 001

## Description

### Arrière-plan de l'invention

La présente invention se rapporte au domaine général des turbines à gaz et concerne plus particulièrement un procédé permettant une surveillance du rendement volumétrique de la pompe haute pression (HP) du système de régulation hydraulique d'une turbomachine sans recourir à l'utilisation d'un capteur ou d'un système spécifique.

Le domaine d'application de l'invention est celui des turbines à gaz pour moteurs d'avions ou d'hélicoptères qui comportent généralement une pompe volumétrique haute-pression pour la production d'énergie hydraulique, l'alimentation en carburant des moteurs et la lubrification des différents accessoires de ce moteur.

De façon connue en soi (par exemple FR 2 923 871), le contrôle du rendement de la pompe HP est réalisé par la vanne de coupure haute-pression (HPSOV - high pressure shut-off valve) qui assure la pressurisation des moteurs et qui connaissant le niveau de fuites du système hydraulique permet de déterminer celui de la pompe HP en y soustrayant les fuites provenant de différents composants du système comme les vérins, les servovannes et divers autres vannes intermédiaires.

Toutefois, si cette solution est pleinement satisfaisante pour l'évaluation des fuites globales du système, elle ne permet pas un suivi précis du rendement de la pompe HP du fait de la dégradation avec le temps de l'ensemble des composants du système et de l'absence de coupure à bas régime de la commande hydraulique des aubes à géométrie variable, ce qui pose un problème lorsqu'il s'agit d'évaluer la capacité de ce système à assurer le redémarrage en vol des moteurs ou lorsqu'il s'agit de planifier, sans impact opérationnel majeur, une dépose de la pompe HP.

### Objet et résumé de l'invention

La présente invention a donc pour but principal de proposer un procédé de suivi du rendement volumétrique de la pompe HP d'un système de régulation hydraulique de turbomachine qui permette de pallier de tels inconvénients.

Ce but est atteint grâce à un procédé de suivi du rendement volumétrique d'une pompe haute-pression d'un système de régulation hydraulique d'une turbomachine comportant une pompe volumétrique haute-pression délivrant un débit Q, fonction d'un régime moteur N de ladite turbomachine défini par un calculateur de commande, en direction d'un vérin d'actionnement des aubes à géométrie variable de ladite turbomachine et d'une vanne de by-pass disposée dans une canalisation d'alimentation des moteurs de ladite turbomachine, caractérisé en ce qu'il comporte les étapes suivantes :
mettre en route les moteurs de ladite turbomachine à un bas régime moteur N0, ladite vanne étant fermée,
commander depuis ledit calculateur un déplacement dudit vérin,
augmenter progressivement ledit régime moteur N jusqu'à ce que ledit débit Q atteigne une valeur prédéterminée Q0 suffisante pour ouvrir ladite vanne,
stocker dans ledit calculateur d'une part la position dudit vérin et d'autre part le régime moteur N correspondant à l'ouverture de ladite vanne,
répéter les étapes précédentes à des instants t1, t2, tn successifs durant la durée de vie desdits moteurs de la turbomachine, et
remplacer ladite pompe volumétrique haute pression lorsque ledit régime moteur N excède une valeur prédéterminée Nₗᵢₘᵢₜₑ.

Ainsi, en supprimant tout intermédiaire entre la pompe HP et la vanne surveillée, on peut suivre au plus près la dégradation du rendement de la pompe HP et donc aussi surveiller les capacités de redémarrage en vol des moteurs de la turbomachine.

De préférence, ladite position du vérin est mesurée par un capteur LVDT dudit vérin et ladite valeur prédéterminée Q0 de débit correspond à un seuil de tarage d'un ressort de ladite vanne.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un schéma de principe simplifié d'un système hydraulique de turbomachine, vanne de by-pass fermée ;
- la figure 2 est un schéma de principe simplifié d'un système hydraulique de turbomachine, vanne de by-pass ouverte ;
- la figure 3 sont deux courbes illustrant respectivement la position vérin et le régime moteur en fonction du temps pendant un démarrage moteur; et
- la figure 4 est une courbe montrant le régime d'ouverture de la vanne de by-pass en fonction du temps.

### Description détaillée d'un mode de réalisation

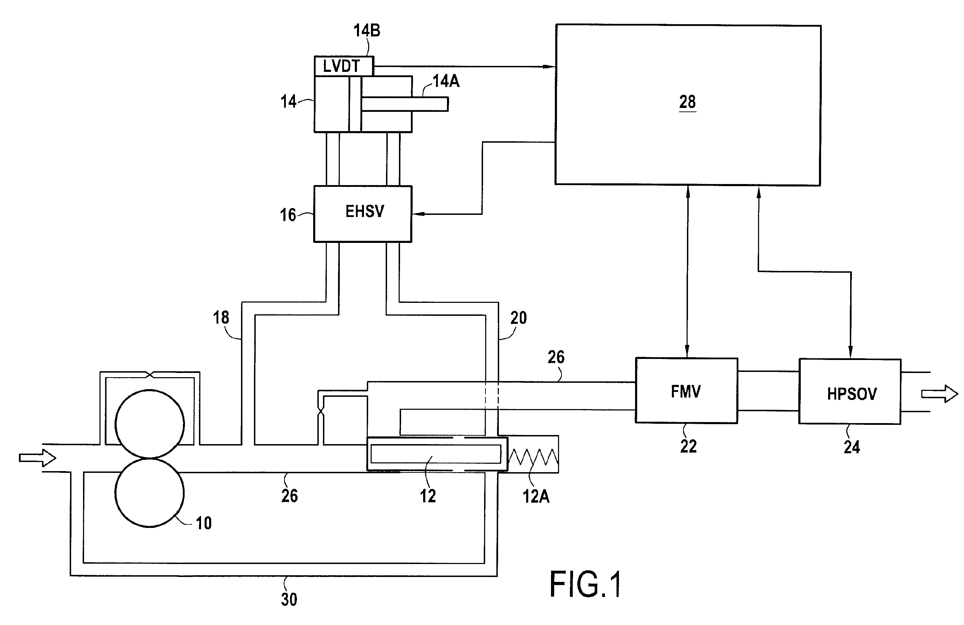

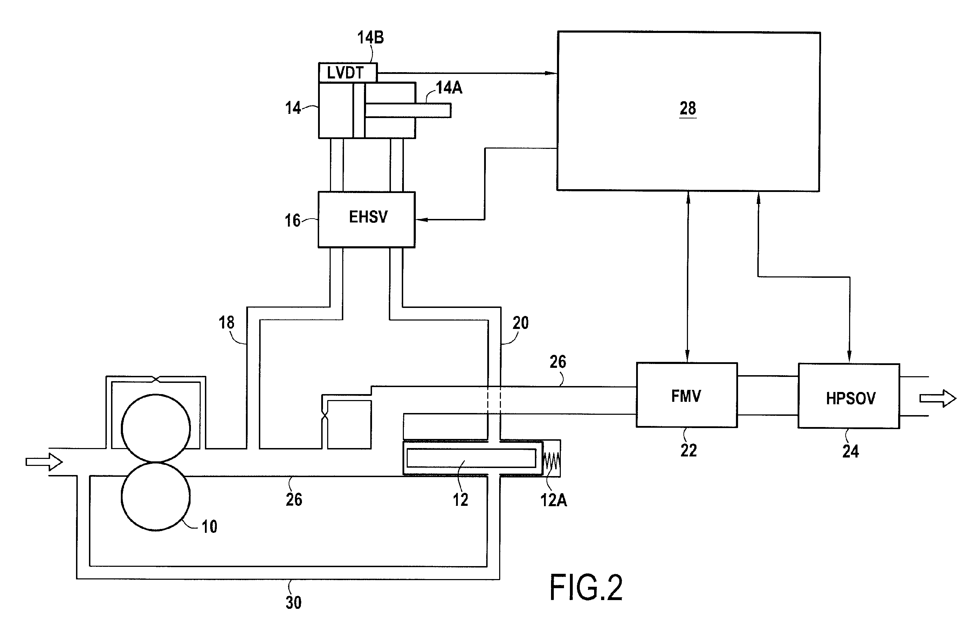

Les figures 1 et 2 montrent un schéma de principe simplifié d'un système hydraulique de turbomachine dans deux positions opposées de la vanne de by-pass (VBV - variable by-pass valve).

Classiquement, la pompe volumétrique haute-pression (pompe HP 10) est suivie directement en aval par une vanne de by-pass 12 qui permet d'assurer la montée en pression du système hydraulique. Cette vanne s'ouvre lorsque le débit qui lui est appliqué permet d'atteindre le seuil de tarage précisément connu de son ressort 12A. Elle permet d'une part la mise en mouvement d'un vérin 14 assurant le déplacement des aubes à géométrie variable (non représentées) via une servovalve associée 16 reliée par une canalisation amont 18 à la pompe HP et par une canalisation aval 20 à la vanne de by-pass 12 et d'autre part l'alimentation des moteurs (non représentés) par la mise en communication de ceux-ci avec la pompe HP via successivement une vanne de dosage de carburant FMV 22 et une vanne de coupure haute-pression HPSOV 24 montées sur une canalisation d'alimentation de ces moteurs 26. Un calculateur 28 relié aux différents composants du système hydraulique assure son contrôle général à partir de différentes données, comme le régime moteur N souhaité ou le déplacement du piston 14A du vérin 14 mesuré par un capteur LVDT (linear variable displacement transducer 14B). Bien entendu, le circuit hydraulique comporte d'autres composants connus (par exemple des filtres, vannes, échangeurs,...) dont la description n'apparait toutefois pas nécessaire pour la compréhension de l'invention et qui ne sont donc pas représentés. On notera cependant la canalisation 30 de recirculation du débit de la vanne de by-pass reliée à la canalisation aval 20 au travers de la vanne de by-pass 12.

Le fonctionnement du système précédent est le suivant. Le gavage de la pompe volumétrique HP étant assuré par une pompe BP non représentée située en amont, cette pompe HP 10 délivre un débit fonction du régime moteur N en direction du vérin 14 (via la servovalve 16) et de la vanne de by-pass 12. La pompe HP fuit naturellement sur elle-même et les fuites sont d'autant plus grandes que la pompe est dégradée.

Lorsque la vanne de by-pass 12 est dans un état fermé (figure 1), la canalisation 20 entre la sortie de la servovalve 16 et la vanne de by-pass 12 est obstruée par cette dernière. Le delta de pression aux bornes du vérin 14 est nul et les deux chambres de ce vérin étant à pression identique, le piston 14A est immobile ainsi que les aubes à géométrie variable qu'il actionne.

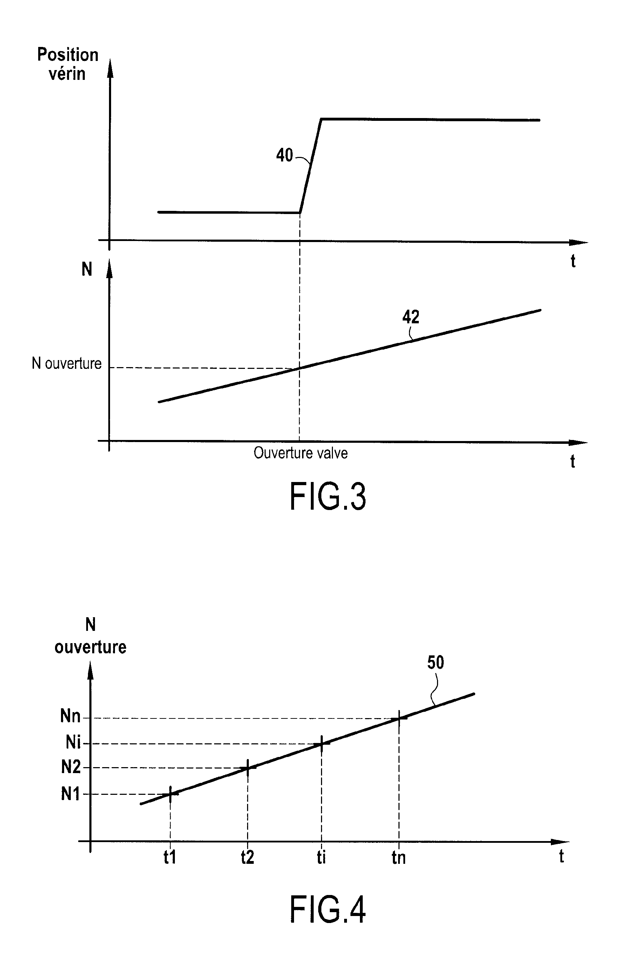

Dès que la pression au niveau de la vanne de by-pass 12 dépasse le seuil de tarage du ressort 12A, c'est-à-dire quand le débit qu'elle voit est suffisamment élevé, elle commute dans un état de pleine ouverture (figure 2) et la canalisation 20 entre la sortie de la servovalve 16 et la vanne de by-pass 12 n'est plus obstruée. Le carburant est alors à basse pression et le piston 14A est soumis à une pression différentielle (delta pression non nul) qui le met en mouvement, comme l'illustre la courbe 40 de la figure 3. Le vérin étant équipé du LVDT 14B, il est alors possible au moyen du calculateur 28 de détecter précisément l'instant où le piston est déplacé, correspondant donc à cette ouverture de la vanne de by-pass, et de relever le régime moteur N associé (voir la courbe 42).

Selon l'invention, pour assurer le suivi du rendement volumétrique de la pompe HP 10 du système de régulation hydraulique d'une turbomachine, les inventeurs partant du constat que si la pompe HP se dégrade au cours du temps, les régimes moteurs N relevés précédemment seront alors également différents, ont mis au point un procédé innovant reposant sur les étapes suivantes.

Le moteur est en fonctionnement au sol à un bas régime initial N0 et la vanne de by-pass 12 est fermée. Il est tout d'abord procédé depuis le calculateur 28 à la commande de mise en mouvement du vérin 14. Toutefois, la vanne de by-pass étant fermée, le vérin ne peut répondre à cette commande et reste donc immobile. En parallèle à cette commande, le régime moteur N est augmenté progressivement. Tant que le débit envoyé sur la vanne de by-pass 12 n'est pas suffisant, cette dernière reste fermée et le vérin 14 ne bouge pas. Quand le débit est suffisant (valeur déterminée Q0 correspondant au seuil de tarage du ressort 12A), la vanne de by-pass 12 s'ouvre et le vérin 14 se met alors en mouvement. Le régime moteur N correspondant à l'ouverture de la vanne de by-pass 12 et donc au mouvement du vérin est relevé grâce au LVDT 14B du vérin auquel le calculateur 28 est relié et stocké dans ce dernier.

En répétant les étapes précédentes à des instants successifs t1, t2, ..., tn au cours de la durée de vie des moteurs, on obtient la courbe 50 de la figure 4 qui permet de suivre précisément la dégradation du rendement de la pompe HP 10 et en définissant une valeur limite Nₗᵢₘᵢₜₑ à ne pas dépasser pour le régime moteur, de décider alors des actions qui s'imposent notamment quant au remplacement de cette pompe HP.

## Revendications

1. Procédé de suivi du rendement volumétrique d'une pompe haute-pression d'un système de régulation hydraulique d'une turbomachine comportant une pompe volumétrique haute-pression (10) délivrant un débit Q, fonction d'un régime moteur N de ladite turbomachine défini par un calculateur de commande (28), en direction d'un vérin d'actionnement (14) des aubes à géométrie variable de ladite turbomachine et d'une vanne de by-pass (12) disposée dans une canalisation (26) d'alimentation du moteur de ladite turbomachine, **caractérisé en ce qu'**il comporte les étapes suivantes :
mettre en route le moteur de ladite turbomachine à un bas régime moteur N0, ladite vanne (12) étant fermée,
commander depuis ledit calculateur (28) un déplacement dudit vérin (14),
augmenter progressivement ledit régime moteur N jusqu'à ce que ledit débit Q atteigne une valeur prédéterminée Q0 suffisante pour ouvrir ladite vanne (12),
stocker dans ledit calculateur (28) d'une part la position dudit vérin (14) et d'autre part le régime moteur N correspondant à l'ouverture de ladite vanne (12),
répéter les étapes précédentes à des instants t1, t2, tn successifs durant la durée de vie dudit moteur de la turbomachine, et
remplacer ladite pompe volumétrique haute-pression (10) lorsque ledit régime moteur N excède une valeur prédéterminée Nₗᵢₘᵢₜₑ.

2. Procédé de suivi selon la revendication 1, **caractérisé en ce que** ladite position du vérin (14) est mesurée par un capteur LVDT dudit vérin (14).

3. Procédé de suivi selon la revendication 1, **caractérisé en ce que** ladite valeur prédéterminée Q0 de débit correspond à un seuil de tarage d'un ressort (12A) de ladite vanne (12).

## Patentansprüche

1. Verfahren zur Überwachung des volumetrischen Wirkungsgrades einer Hochdruckpumpe eines hydraulischen Regelungssystems einer Turbomaschine, mit einer Hochdruckverdrängerpumpe (10), die eine Menge Q, welche von einer durch einen Steuerungsrechner (28) definierten Triebwerkdrehzahl N der Turbomaschine abhängig ist, in Richtung eines Zylinders zur Betätigung (14) der Schaufeln mit veränderlicher Geometrie der Turbomaschine und eines Bypass-Ventils (12), das in einer Rohrleitung (26) zur Versorgung des Triebwerks der Turbomaschine angeordnet ist, liefert, **dadurch gekennzeichnet, dass** es die folgenden Schritte umfasst:
Ingangsetzen des Triebwerks der Turbomaschine mit einer niedrigen Triebwerkdrehzahl NO, wobei das Ventil (12) geschlossen ist,
Steuern einer Bewegung des Zylinders (14) von dem Rechner (28) aus,
schrittweises Erhöhen der Triebwerkdrehzahl N bis die Menge Q einen vorbestimmten Wert Q0 erreicht, der ausreichend ist, um das Ventil (12) zu öffnen,
Speichern einerseits der Position des Zylinders (14) und andererseits der Triebwerkdrehzahl N, die dem Öffnen des Ventils (12) entspricht, in dem Rechner (28),
Wiederholen der vorhergehenden Schritte zu aufeinanderfolgenden Zeitpunkten t1, t2, tn über die Lebensdauer des Triebwerks der Turbomaschine und
Ersetzen der Hochdruckverdrängerpumpe (10), wenn die Triebwerkdrehzahl N einen vorbestimmten Wert Nₗᵢₘᵢₜₑ überschreitet.

2. Überwachungsverfahren nach Anspruch 1, **dadurch gekennzeichnet, dass** die Position des Zylinders (14) durch einen LVDT-Sensor des Zylinders (14) gemessen wird.

3. Überwachungsverfahren nach Anspruch 1, **dadurch gekennzeichnet, dass** der vorbestimmte Wert Q0 der Menge einer Einstellschwelle einer Feder (12A) des Ventils (12) entspricht.

## Claims

1. A method of tracking the positive displacement efficiency of a high pressure pump in a hydraulic regulator system of a turbomachine having a high pressure positive displacement pump (10) delivering a flow rate Q that is a function of an engine speed N of said turbomachine as defined by a control computer (28), the flow rate Q being delivered to an actuator (14) for actuating variable geometry vanes of said turbomachine and to a bypass valve (12) arranged in a feed pipe (26) for feeding fuel to the engine of said turbomachine, the method being **characterized in that** it comprises the following steps:
starting the engine of said turbomachine at a low engine speed NO, said valve (12) being closed;
using said computer (28) to order a movement of said actuator (14);
progressively increasing said engine speed N until said flow rate Q reaches a predetermined value Q0 that is sufficient for opening said valve (12);
storing in said computer (28) firstly the position of said actuator (14) and secondly the engine speed N corresponding to the opening of said valve (12);
repeating the preceding steps at successive instants t1, t2, tn during the lifetime of said engine of the turbomachine; and
replacing said high pressure positive displacement pump (10) when said engine speed N exceeds a predetermined value Nₗᵢₘᵢₜ.

2. A tracking method according to claim 1, **characterized in that** said position of the actuator (14) is measured by an LVDT sensor of said actuator (14).

3. A tracking method according to claim 1, **characterized in that** said predetermined value Q0 for the flow rate corresponds to a rated threshold of a spring (12A) of said valve (12).
